# EUROPÄISCHE PATENTANMELDUNG

(11) **EP 0 580 884 A1**
(43) Veröffentlichungstag der Anmeldung: **02.02.1994**
(21) Anmeldenummer: 92112835.1
(22) Anmeldetag: 28.07.1992
(51) Int. Cl.: G01D 5/22, G01D 3/02

(54) **Induktiver Wegaufnehmer**

(71) Anmelder: HOTTINGER BALDWIN MESSTECHNIK GMBH, D-64201 Darmstadt (DE)
(72) Erfinder: Geisler, Peter, Dr., D-6100 Darmstadt (DE); Brader, Detlef, D-6102 Pfungstadt (DE); Horst, Nicklas, D-6101 Modautal 1 (DE)
(74) Vertreter: Brandt, Ernst-Ulrich, Dipl.-Phys., Dipl.-Ing.

(57) **Zusammenfassung**

Die Erfindung bezieht sich auf einen induktiven Wegaufnehmer mit einer wechselstromgespeisten Spulenanordnung, die mindestens zwei Spulen (13, 14) enthält, einem innerhalb dieser Spulen axial verschiebbaren Kern, dessen Verschiebung die Induktivität der Spulen (13, 14) gegensinnig verändert, wobei die beiden Spulen derart in jeweils einem Zweig (12, 15) einer Meßbrückenschaltung vorgesehen sind, daß bei einer Verschiebung des Kernes beide Spuleninduktivitäten das Brückengleichgewicht gleichsinnig beeinflussen. Zur Kompensation von Linearitätsabweichungen des Meßsignales wird vorgeschlagen, daß zwischen den Spulen (13 bzw. 14) und dem Diagonalspannungsabgriff (18) der Meßbrückenschaltung je eine Entkopplungsimpedanz (16 bzw. 17) geschaltet ist und daß jeweils zwischen der zugeordneten Entkopplungsimpedanz und der einen Spule eine Leitung (19 bzw. 20) abzweigt, die mit jeweils einer der beiden Brückenversorgungsleitungen verbunden ist, wobei diese Leitung (19, 20) eine einstellbare Impedanz (21, 22) enthält.

## Beschreibung

Die Erfindung betrifft einen induktiven Wegaufnehmer mit einer wechselstromgespeisten Spulenanordnung, die mindestens zwei Spulen enthält, einem innerhalb dieser Spulen axialverschiebbaren Kern, dessen Verschiebung die Induktivität der Spulen gegensinnig verändert, wobei die beiden Spulen derart in jeweils einem Zweig einer Meßbrückenschaltung vorgesehen sind, das bei einer Verschiebung des Kerns beide Induktivitäten das Brückengleichgewicht gleichsinnig beeinflussen.

Derartige Wegaufnehmer, welche auch unter der Bezeichnung Differential-Tauchankergeber bekannt sind, zeichnen sich vor allem durch ihre Verschleißfreiheit, Robustheit und ihre Unempfindlichkeit gegen Einwirkung von Feuchtigkeit aus. Nachteilig bei diesen Wegaufnehmern sind die typischen, in der Regel näherungsweise sinusförmigen, Linearitätsabweichungen, welche es trotz erheblichen Aufwandes bisher nicht zuließen, gezielt Aufnehmer mit einem Linearitätsfehler von deutlich weniger als 2 ‰ zu fertigen. Gattungsgemäße Wegaufnehmer, welche mit ihrer Linearitätsabweichung unterhalb dieser Grenze lagen, entstammten meist einer selektiven Entnahme aus der Serie.

Der Erfindung liegt daher die Aufgabe zugrunde, einen gattungsgemäßen induktiven Wegaufnehmer zu schaffen, welcher sich durch eine hohe Genauigkeit auszeichnet. Insbesondere soll durch einfache Mittel eine deutliche Verbesserung der Linearität erreicht werden.

Diese Aufgabe wird erfindungsgemäß dadurch gelöst, daß zwischen den Spulen und dem Diagonalspannungsabgriff der Meßbrückenschaltung je eine Entkopplungsimpedanz geschaltet ist, und daß jeweils zwischen der zugeordneten Entkopplungsimpedanz und der einen Spule eine Leitung abzweigt, die mit jeweils einer der beiden Brückenversorgungsleitungen verbunden ist, wobei diese Leitung eine einstellbare Impedanz enthält. Bei dem erfindungsgemäßen Wegaufnehmer ist also vorgesehen, daß sich der Einfluß derjenigen einstellbaren Impedanz, die mit der Spule, in welche der Kern hineingeschoben wird, in Reihe geschaltet ist, auf das Ausgangssignal verringert, während sich der Einfluß der zu dieser Spule parallel geschalteten einstellbaren Impedanz erhöht.

Die Verknüpfung dieser beiden in der Kennlinie einstellbaren, entgegengesetzten Effekte ermöglicht den Abgleich sinusförmig verlaufender Linearitätsabweichungen.

Eine bevorzugte Ausführungsform der Erfindung sieht vor, daß die Entkopplungsimpedanzen durch Spulen gebildet werden. Diese können dann zusammen mit den Meßspulen gewickelt werden, was neben einem kompakten Aufbau auch eine günstige Fertigung ergibt.

Da sich beim Abgleichen des Linearitätsfehlers durch die einstellbaren Impedanzen der Phasenwinkel verändert, ist es von Vorteil, wenn die Brückenschaltung ein Phasendreh-Netzwerk aufweist. Durch diese Maßnahme läßt sich der Phasenwinkel des Ausgangssignales des Aufnehmers, bezogen auf den Phasenwinkel der Referenzspannung des Demodulators, in den Bereich von Null einstellen, so daß Phasenabweichungen zwischen dem Ausgangssignal und der Referenzspannung einen möglichst geringen Einfluß auf das Meßsignal haben.

Weitere vorteilhafte Merkmale sowie die Funktion der Erfindung ergeben sich aus der nachstehenden Beschreibung eines Ausführungsbeispiels anhand der Zeichnung. Hierzu zeigt Figur 1 eine Prinzipskizze des grundsätzlichen Aufbaus eines gattungsgemäßen Wegaufnehmers, Figur 2 verdeutlicht die typische Linearitätsabweichung eines solchen Aufnehmers und Figur 3 zeigt schematisch den Schaltungsaufbau eines erfindungsgemäßen Wegaufnehmers.

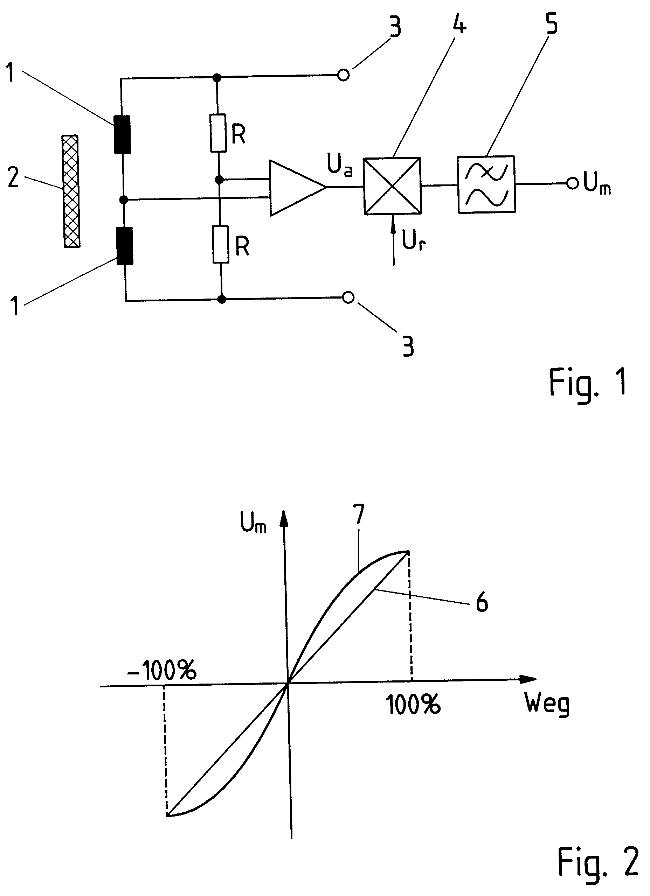

Bekannte Wegaufnehmer, deren Grundprinzip in Figur 1 dargestellt ist, weisen zwei Meßspulen 1 auf, welche jeweils in einem Zweig einer Meßbrückenschaltung angeordnet sind. Ein weichmagnetischer Kern 2, der der Übersichtlichkeit wegen außerhalb der Meßspule 1 dargestellt ist, ragt zur Hälfte in jede der Meßspulen hinein und ist in ihnen axial verschiebbar. Die beiden Zweige der anderen Halbbrücke sind mit je einem Widerstand R bestückt, an den Anschlußpunkten 3 wird die Meßbrückenschaltung mit einer Wechselspannung gespeist. Aus der Diagonalspannung zwischen den beiden Halbbrücken wird das Ausgangssignal Uₐ gebildet, welches einem Demodulator 4 zugeführt wird, an welchem das Referenzsignal Uᵣ anliegt. Das demodulierte Signal wird dann einer Tiefpaßschaltung 5 zugeführt, in welcher ein der Lage des Kerns 2 proportionales Meßsignal Uₘ generiert wird.

Figur 2 zeigt ein typisches Meßsignal Uₘ von Wegaufnehmern nach dem Differential-Tauchankerprinzip. Die ideale gerade Kennlinie 6 wird in der Praxis nicht erreicht, viel mehr stellen sich reale Kennlinien 7 ein, wobei die Linearitätsabweichung als Differenz zwischen beiden Kennlinien einen etwa sinusförmigen Verlauf hat. Es hat in der Vergangenheit nicht an Bemühungen gemangelt, diese Linearitätsabweichungen durch aufwendige Rechen- und Speicherwerke in den Griff zu bekommen. Durch die Erfindung jedoch wird es möglich, den Linearitätsfehler auf einfache Weise bereits in der Meßbrückenschaltung selbst zu kompensieren.

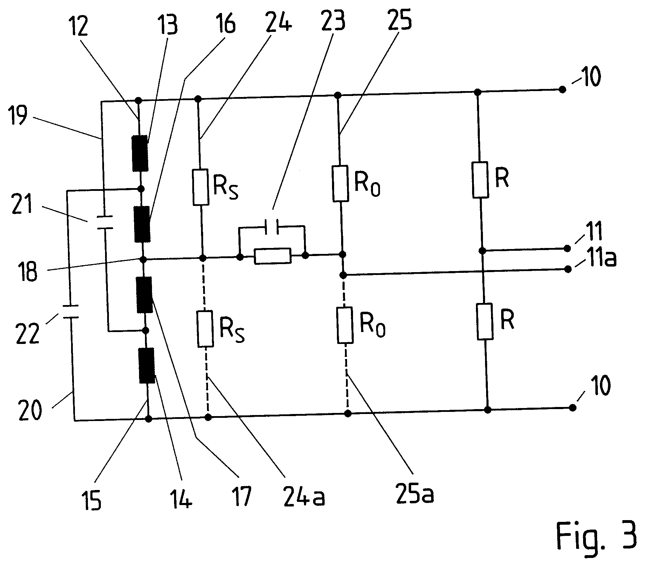

Figur 3 zeigt ein Ausführungsbeispiels hierzu. Die Meßbrücke wird an den Anschlußstellen 10 mit Wechselstrom gespeist, die Diagonalspannung Uₐ wird an den Anschlußpunkten 11, 11 a abgegriffen. Auf den beiden Zweigen der ersten Halbbrücke ist jeweils ein Widerstand R vorgesehen, auf der anderen Halbbrücke befinden sich in einem ersten Zweig 12 die erste Meßspule 13 und in dem zweiten Zweig 15 die zweite Meßspule 14. Zwischen diesen beiden Meßspulen 13, 14 befindet sich der Diagonalabgriff 18. Jeweils zwischen dem Diagonalabgriff 18 und der zugeordneten Meßspule 13 oder 14 ist im ersten Zweig die erste Entkopplungsspule 16 und im zweiten Zweig 15 die zweite Entkopplungsspule 17 angeordnet.

Elektrisch parallel geschaltet zum ersten Zweig 12 ist die Leitung 19, welche zwischen der zweiten Meßspule 14 und der zweiten Entkopplungsspule 17 an den zweiten Zweig 15 angeschlossen ist. Die Leitung 19 enthält einen ersten Kondensator 21, dessen Kapazität einstellbar ist. Parallel geschaltet zum zweiten Zweig 15 verläuft die Leitung 20 mit dem einstellbaren zweiten Kondensator 22, welcher zwischen der ersten Meßspule 13 und der ersten Entkopplungsspule 16 an den ersten Zweig angeschlossen ist.

Vom Diagonalabgriff 18 aus ist diese Halbbrücke über ein Phasendreh-Netzwerk 23 mit dem Anschlußpunkt 11 a verbunden. Parallel zu den Zweigen der Halbbrücken sind zwischen dem Diagonalabgriff 18 und dem Phasendreh-Netzwerk 23 die Leitungen 24 oder 24 a angeschlossen, die einen verstellbare Widerstand Rₛ enthält, wodurch die Symmetrie der Kennlinie einstellbar ist. Ebenfalls parallel zu den Halbbrücken verläuft die Leitung 25 oder 25 a, welche einen verstellbaren Widerstand R₀ zum Einstellen des Nullpunktes aufweist.

Innerhalb der Spulen 13 bis 17 ist ein weichmagnetischer Kern axial veschiebbar gelagert, der in Längsrichtung gesehen die Entkopplungsspulen 16 und 17 stets komplett und die Meßspulen 13 und 14 in der Nullage jeweils zur Hälfte ihrer Länge durchsetzt. Die Meßspanne entspricht daher etwa der Länge einer Meßspule.

Wird nun der Kern, welcher der Übersichtlichkeit wegen nicht dargestellt ist, aus der Nullage heraus in Richtung der zweiten Meßspule 14 verschoben, so erhöht sich der Wechselstromwiderstand der Meßspule 14, während sich der Wechselstromwiderstand der Meßspule 13 erniedrigt. Die Impedanzen der Entkopplungsspulen 16 und 17 verändern sich näherungsweise nicht. Mit zunehmender Verschiebung des Kerns in Richtung der Meßspule 14 fällt der Wert des über die Leitung 19 fließenden Stromes ab, während der über die Leitung 20 fließende Strom ansteigt. Aufgrund der gegensinnig gekrümmten Verläufe der Ströme in den Leitungen 19 und 20, läßt sich der über den Meßweg sinusförmig verlaufende Linearitätsfehler durch entsprechendes Abgleichen der Kondensatorimpedanzen kompensieren.

Der sich bei dem Abgleichen ändernde Phasenwinkel zwischen Strom und Spannung läßt sich durch entsprechende Veränderungen am Phasendreh-Netzwerk 23 so korrigieren, daß er im Bereich von Null liegt. Dadurch wirkt sich die unvermeidbare wegabhängige Phasenabweichung zwischen dem Diagonalsignal Uₐ und der am Demodulator anliegenden Referenzwechselspannung Uᵣ nur minimal auf das Meßsignal Uₘ aus, da diese Abweichung vom Cosinus-Wert des Phasenwinkels abhängt und sich die Cosinus-Werte im Bereich des Null-Winkels nur unwesentlich verändern.

Um einen besonders kompakten Wegaufnehmer zu realisieren, ist es sinnvoll, die Kompensationsschaltung in SMD-Technik auszuführen.

## Patentansprüche

1. Induktiver Wegaufnehmer mit einer wechselstromgespeisten Spulenanordnung, die mindestens zwei Spulen enthält, einem innerhalb dieser Spulen axial verschiebbaren Kern, dessen Verschiebung die Induktivität der Spulen gegensinnig verändert, wobei die beiden Spulen derart in jeweils einem Zweig einer Meßbrückenschaltung vorgesehen sind, daß bei einer Verschiebung des Kernes beide Induktivitäten das Brückengleichgewicht gleichsinnig beeinflussen, dadurch gekennzeichnet, daß zwischen den Spulen (13, 14) und dem Diagonalspannungsabgriff (18) der Meßbrückenschaltung je eine Entkopplungsimpedanz (16 bzw. 17) geschaltet ist und daß jeweils zwischen der zugeordneten Entkopplungsimpedanz und der einen Spule eine Leitung (19 bzw. 20) abzweigt, die mit jeweils einer der beiden Brückenversorgungsleitungen verbunden ist, wobei diese Leitung (19 bzw. 20) eine einstellbare Impedanz (21 bzw. 22) enthält.

2. Induktiver Wegaufnehmer nach Anspruch 1, dadurch gekennzeichnet, daß die Entkopplungsimpedanzen durch Spulen (16, 17) gebildet werden.

3. Induktiver Wegaufnehmer nach einem der vorhergehenden Ansprüche, dadurch gekennzeichnet, daß die Brückenschaltung ein Phasendreh-Netzwerk (23) aufweist.
